# EUROPÄISCHE PATENTANMELDUNG

(11) **EP 4 131 029 A1**
(43) Veröffentlichungstag der Anmeldung: **08.02.2023**
(21) Anmeldenummer: 22189107.0
(22) Anmeldetag: 05.08.2022
(51) Int. Cl.: G06F 16/903, G06F 16/9035, G06Q 30/00

(54) **VORRICHTUNG ZUR ÜBERMITTLUNG VON EINEM SUCHERGEBNIS**

(30) Priorität: 06.08.2021 CH 0701412021
(71) Anmelder: Avobis Data AG, 8001 Zürich (CH)
(72) Erfinder: SCHMID, Patrick, 8910 Affoltern am Albis (CH)
(74) Vertreter: Rentsch Partner AG

(57) **Zusammenfassung**

Vorrichtung (1) zur Übermittlung von Immobiliendatenobjekten (122), umfassend einen Prozessor (11) und einen nichtflüchtigen Datenspeicher (12), wobei der Prozessor (11) eingerichtet ist, folgende Schritte auszuführen: Empfangen von Nutzerkriterien (121) und Wohnkriterien (120); Erzeugen eines mit dem Nutzer verknüpften Immobiliendatenobjekts (122) anhand der Wohnkriterien (120), wobei die Eigenschaften eines Immobiliendatenobjekts Immobilieneigenschaften und Standorteigenschaften umfassen; Berechnen, für jede Eigenschaft einer Mehrzahl von Immobiliendatenobjekten (122) umfassend des mit dem Nutzer verknüpften Immobiliendatenobjektes und umfassend mit verfügbaren Immobilien verknüpften Immobiliendatenobjekten, einer Teilpunktzahl entsprechend einem Übereinstimmungsgrad der jeweiligen Eigenschaft und des dazugehörigen Nutzerkriteriums (121); Bestimmen, für jedes Immobiliendatenobjekt (122), einer Gesamtpunktzahl des Immobiliendatenobjekts (122) anhand der Teilpunktzahlen des Immobiliendatenobjekts (122); Erzeugen, anhand der Mehrzahl von Immobiliendatenobjekten (122), einer Teilmenge der Immobiliendatenobjekte (122), wobei die Gesamtpunktzahl jedes Immobiliendatenobjekts (122) der Teilmenge grösser oder gleich gross ist wie die Gesamtpunkzahl jedes übrigbleibenden Immobiliendatenobjektes (122) und wie die Gesamtpunktzahl des aus den Wohnkriterien (120) übertragenen Immobiliendatenobjektes; und Übermitteln von einem Suchergebnis (21) zu dem Nutzergerät (2) über das Kommunikationsnetz (3), wobei das Suchergebnis (21) die Teilmenge von Immobiliendatenobjekten (122) umfasst.

## Beschreibung

### TECHNISCHES GEBIET

Die vorliegende Erfindung betrifft eine Vorrichtung zur Übermittlung von einem Suchergebnis.

### HINTERGRUND DER ERFINDUNG

Immobiliendatenobjekte werden heutzutage digital verwaltet von Online-Plattformen, die Servervorrichtungen über das Internet zur Verfügung stellen. Nutzer, mittels digitaler Nutzergeräte, können sich mit der Online-Plattform verbinden und eine Vielzahl von Immobiliendatenobjekten in einem digitalen Katalog durchblättern, oder auch durchsuchen gemäss definierten Nutzerkriterien. Zum Beispiel kann ein Nutzer eine Anzahl Zimmer bestimmen oder einen geographischen Bereich bestimmen, wie zum Beispiel durch eine Postleitzahl. Die grosse Anzahl von Immobiliendatenobjekten, die die Kriterien erfüllen, führt zu einem grossen Datenvolumen das zwischen den Servervorrichtungen der Online-Plattformen und den Nutzergeräten ausgetauscht wird. Die Immobiliendatenobjekte, die dem Nutzer vorgeschlagen basierend auf den Nutzerkriterien werden, werden typischerweise unsortiert zum Nutzergerät übermittelt und dort angezeigt.

### DARSTELLUNG DER ERFINDUNG

Es ist daher ein Ziel der vorliegenden Erfindung, das Datenvolumen, das zwischen der Servervorrichtung und dem Nutzergerät ausgetauscht wird, und der damit eingehende Stromkonsum und Belastung der Kommunikationsinfrastruktur, zu reduzieren. Diese Aufgabe wird durch die in den unabhängigen Patentansprüchen definierte Erfindung gelöst. Insbesondere wird sie gelöst durch eine Vorrichtung zur Übermittlung von Immobiliendatenobjekten umfassend einen Prozessor und einen nichtflüchtigen Datenspeicher, wobei der Prozessor eingerichtet ist, Nutzerkriterien von einem Nutzergerät über ein Kommunikationsnetz zu empfangen, wobei die Nutzerkriterien Immobilienkriterien und Standortkriterien umfassen, wobei ein Immobilienkriterium auf eine Immobilieneigenschaft bezogen ist und ein Standortkriterium auf eine Standorteigenschaft bezogen ist. Die Nutzerkriterien umfassen Informationen zu einer gewünschten Wohnsituation. Der Prozessor ist eingerichtet, für jede Eigenschaft einer Mehrzahl von Immobiliendatenobjekten eine Teilpunktzahl zu berechnen, entsprechend einem Übereinstimmungsgrad der jeweiligen Eigenschaft und des dazugehörigen Nutzerkriteriums, wobei die Eigenschaften Immobilieneigenschaften und Standorteigenschaften umfassen. Der Prozessor ist eingerichtet, für jedes Immobiliendatenobjekt eine Gesamtpunktzahl des Immobiliendatenobjekts anhand der Teilpunktzahlen des Objekts zu bestimmen. Der Prozessor ist eingerichtet anhand der Mehrzahl von Immobiliendatenobjekten eine Teilmenge der Immobiliendatenobjekte zu erzeugen, wobei die Gesamtpunktzahl jedes Immobiliendatenobjekts der Teilmenge grösser oder gleich gross ist wie die Gesamtpunkzahl jedes übrigbleibenden Immobiliendatenobjektes. Der Prozessor ist eingerichtet, ein Suchergebnis zu dem Nutzergerät über das Kommunikationsnetz zu übermitteln, wobei das Suchergebnis die Teilmenge von Immobiliendatenobjekten umfasst.

In einem Ausführungsbeispiel ist der Prozessor ferner dazu eingerichtet, Wohnkriterien von einem Nutzergerät über ein Kommunikationsnetz zu empfangen, wobei die Wohnkriterien Immobilienkriterien und Standortkriterien umfassen und sich auf eine aktuelle Wohnsituation eines Nutzers beziehen, wobei ein Immobilienkriterium auf eine Immobilieneigenschaft bezogen ist und ein Standortkriterium auf eine Standorteigenschaft bezogen ist. Der Prozessor ist eingerichtet, ein mit dem Nutzer verknüpftes Immobiliendatenobjekt anhand derWohnkriterien zu erzeugen. In diesem Fall umfassen die Immobiliendatenobjekte das mit dem Nutzer verknüpfte Immobiliendatenobjekt sowie die Mehrzahl von mit verfügbaren Immobilien verknüpften Immobiliendatenobjekte. Die Verknüpfung soll als abstrakter Zusammenhang verstanden werden, wobei das Immobiliendatenobjekt sinngemäss assoziiert oder in Verbindung steht mit einer auf dem Markt verfügbaren Immobilie. In diesem Fall wird die erzeugte Teilmenge der Immobiliendatenobjekte alternativ oder zusätzlich zur beanspruchten Erfindung danach erzeugt, dass die Gesamtpunktzahl jedes Immobiliendatenobjekts der Teilmenge grösser oder gleich gross ist wie die Gesamtpunkzahl des mit dem Nutzer verknüpften Immobiliendatenobjektes oder eine gewichtete Kombination der grösser-oder-gleich-Relationen.

Durch das Bestimmen der Gesamtpunktzahl und das Übermitteln von Immobiliendatenobjekten, abhängig von der Gesamtpunktzahl, stellt die hier beschriebene Vorrichtung sicher, dass eine reduzierte Anzahl von hoch relevanten Immobiliendatenobjekten an das Nutzergerät übermittelt wird. Weil der Nutzer dadurch nur noch hoch relevante Immobiliendatenobjekte im Suchergebnis erhält, die einen hohen Übereinstimmungsgrad mit den definierten Nutzerkriterien aufweisen, muss der Nutzer weniger Suchanfragen erzeugen. Dadurch verarbeitet die Vorrichtung eine geringere Anzahl von Suchanfragen und die Vorrichtung benötigt weniger Rechenleistung und verbraucht weniger Energie als bekannte Vorrichtungen und Systeme aus dem Stand der Technik. Auch die Kommunikationsinfrastruktur zwischen Vorrichtung und Nutzergerät wird weniger belastet als bei herkömmlichen Vorrichtungen, die Suchergebnisse übermitteln. Je nach Ausführungsform der Erfindung und der damit einhergehenden technischen Vorteile, wird die Vorrichtung und die Kommunikationsinfrastruktur noch weniger belastet.

In einem Ausführungsbeispiel ist der Prozessor ferner eingerichtet, eine Diskrepanz zu bestimmen zwischen Nutzerkriterien und dem mit dem Nutzer verknüpften Immobiliendatenobjekt, insbesondere dessen Immobilieneigenschaften. Zum Beispiel können ein Datum des Baujahrs respektive der letzten Renovation eines Zimmertyps (Küche, Badezimmer usw.) oder eine Fläche eines bestimmten Zimmertyps verglichen werden, um die Diskrepanz festzustellen. Das Mass der Diskrepanz kann anhand einer Differenz der jeweiligen Teilpunktzahlen der jeweiligen Eigenschaft bestimmt werden. Der Prozessor ist eingerichtet, anhand der Diskrepanz Vorschläge zu erzeugen, insbesondere Veränderungen der aktuellen Wohnsituation des Nutzers, zum Beispiel durch Renovationen oder Ausbau.

In einem Ausführungsbeispiel umfassen die Nutzerkriterien Personeninformationen. Personeninformationen umfassen, je nach Ausführungsbeispiel körperliche Beeinträchtigungen und Alter.

In einem Ausführungsbeispiel ist der Prozessor eingerichtet die Gesamtpunkzahl als eine Gewichtssumme der Teilpunktzahlen zu berechnen.

In einem Ausführungsbeispiel ist der Prozessor eingerichtet die Gesamtpunkzahl mittels Gewichtsfaktoren zu berechnen, wobei jeder Gewichtsfaktor mit einer bestimmten Teilpunktzahl verbunden ist.

In einem Ausführungsbeispiel umfassen die Nutzerkriterien Gewichtsfaktoren, wobei jeder Gewichtsfaktor einem Nutzerkriterium zugewiesen ist.

In einem Ausführungsbeispiel umfasst das Suchergebnis ferner die Gesamtpunktzahl und/oder die Teilpunktzahlen jedes Immobiliendatenobjekts der Teilmenge.

In einem Ausführungsbeispiel umfasst das Suchergebnis ferner ein Grafikelement für jedes Immobiliendatenobjekt der Teilmenge, wobei das Grafikelement mindestens die Teilpunktzahlen als Teilelemente darstellt, wobei eine dargestellte Länge oder Grösse jedes Teilelements proportional zur dazugehörigen Teilpunktzahl ist.

In einem Ausführungsbeispiel ist der Prozessor eingerichtet, die Teilmenge der Immobiliendatenobjekte mittels eines definierten Gesamtpunktzahlschwellenwerts zu erzeugen, wobei jedes Immobiliendatenobjekt der Teilmenge eine Gesamtpunktzahl aufweist, die grösser oder gleich ist, wie der Gesamtpunktzahlschwellenwert.

In einem Ausführungsbeispiel ist der Prozessor eingerichtet, die Teilmenge der Immobiliendatenobjekte mittels einer vordefinierten maximalen Anzahl von Mitglieder der Teilmenge zu erzeugen.

In einem Ausführungsbeispiel ist der Prozessor eingerichtet, die Teilmenge von Immobiliendatenobjekten vor der Übermittlung zu komprimieren.

In einem Ausführungsbeispiel umfassen die Immobilienkriterien eines oder mehrere der folgenden: eine Anzahl Zimmer, eine Anzahl Personen, eine Fläche, ein Baujahr, und einen Immobilientyp. Weitere Immobilienkriterien können, zum Beispiel, eine Rollstuhlzugänglichkeit, Parkmöglichkeiten, und/oder das Vorhandensein eines Aufzugs umfassen.

In einem Ausführungsbeispiel umfassen die Standortkriterien eines oder mehrere der folgenden: einen geeigneten Standort basierend auf Pendelzeiten und/oder Distanzen, einen bestimmten Standort, einen Schallbelastungswert, eine Nähe zu Bildungsinstitutionen, eine Nähe zu Haltestellen des öffentlichen Verkehrs, und eine Nähe zu einem Landschaftstyp.

In einem Ausführungsbeispiel ist der Prozessor ferner eingerichtet, Indikatoren eines Verhaltens des Nutzers von dem Nutzergerät über das Kommunikationsnetz zu empfangen, wobei die Indikatoren aufzeigen, mit welchen im Nutzergerät empfangenen Immobiliendatenobjekten der Nutzer interagiert hat, und die Teilpunktzahl von weiteren Immobiliendatenobjekten anhand der Indikatoren zu berechnen.

In einem Ausführungsbeispiel ist der Prozessor ferner eingerichtet, von mehreren Nutzern jeweils mehrere Wohnkriterien und Nutzerkriterien zu empfangen und die Nutzerkriterien als aggregierten Nutzerbedarf zu speichern. Der Prozessor ist eingerichtet, Diskrepanzen festzustellen zwischen aggregiertem Nutzerbedarf und Immobiliendatenobjekten, insbesondere den mit verfügbaren Immobilien verknüpften Immobiliendatenobjekten. Der Prozessor ist optional dazu eingerichtet, den aggregierter Nutzerbedarf und die Immobiliendatenobjekte statistisch zu analysieren, um Trends zu erkennen und Branchenwissen zu erzeugen, indem der Bedarf bestimmter Nutzergruppen bestimmt wird. Die Gruppen können über die Nutzerkriterien und/oder die Wohnkriterien definiert werden, insbesondere über geographische Lage oder Personeninformationen wie Alter, Zivilstand oder Familiensituation.

### KURZBESCHREIBUNG DER ZEICHNUNGEN

Anhand der in den nachfolgenden Figuren gezeigten Ausführungsbeispiele und der dazugehörigen Beschreibung werden Aspekte der Erfindung näher erläutert. Es zeigen:
- Fig. 1: ein Blockdiagramm, welches schematisch eine erfindungsgemässe Vorrichtung, ein Nutzergerät, und ein dazwischengeschaltetes Kommuni-kationsnetz darstellt;
- Fig. 2: ein Flussdiagramm, welches schematisch das Empfangen von Nutzerkriterien, das Erzeugen einer Teilmenge von Immobiliendatenobjekten und ein Übermitteln von einem Suchergebnis darstellt; und
- Fig. 3: ein Flussdiagramm, welches schematisch eine Registrierung einer Nutzereingabe und das darauf basierte Erzeugen von Gewichtsfaktoren darstellt.

### DETAILLIERTE BESCHREIBUNG DER AUSFÜHRUNGSFORMEN

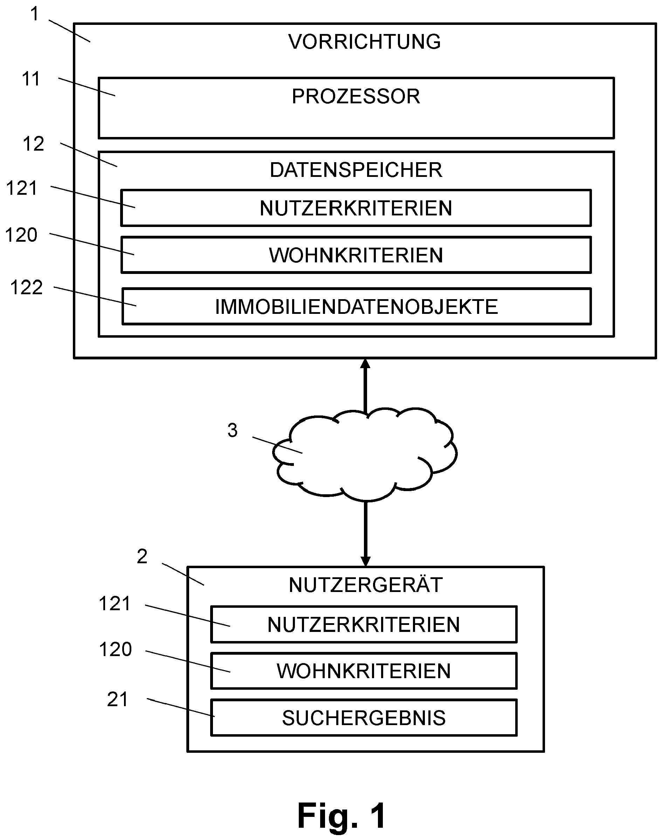

**Figur 1** zeigt eine Vorrichtung 1, die einen Prozessor 11, einen Speicher 12, und ein Kommunikationsmodul umfasst.

Abhängig von der Ausführungsform umfasst der Prozessor 11 ein System auf einer Leiterplatte (PCB, Printed Circuit Board), eine zentrale Verarbeitungseinheit (CPU) und/oder andere spezifischere Verarbeitungseinheiten, wie eine grafische Verarbeitungseinheit (GPU), anwendungsspezifische integrierte Schaltungen (ASICs), reprogrammierbare Verarbeitungseinheiten, wie feldprogrammierbare Gate-Arrays (FPGAs), sowie Verarbeitungseinheiten, die speziell zur Beschleunigung bestimmter Anwendungen konfiguriert sind, wie AI-Beschleuniger (künstliche Intelligenz) zur Beschleunigung von Prozessen in neuronalen Netzen und/oder maschinellen Lernverfahren.

Der Datenspeicher 12 besteht aus einer oder mehreren flüchtigen und/oder nichtflüchtigen Speicherkomponenten. Die Speicherkomponenten können austauschbar und/oder nicht austauschbar sein und können auch ganz oder teilweise in den Serverrechner 1 integriert sein. Beispiele für Speicherkomponenten sind RAM (Random Access Memory), Flash-Speicher, Festplatten, Datenspeicher und/oder Bandspeicher. Der Datenspeicher 12 umfasst ein nichtflüchtiges computerlesbares Medium, auf dem Computerprogrammcode gespeichert ist, der eingerichtet ist, den Prozessor 11 zu steuern, so dass die Vorrichtung 1 einen oder mehrere Schritte und/oder Funktionen, wie hier beschrieben, ausführt. Je nach Ausführungsform umfasst der Computerprogrammcode kompilierte oder nicht kompilierte Programmlogik und/oder Maschinencode. Demnach ist die Vorrichtung 1 derart eingerichtet, dass sie einen oder mehrere Schritte und/oder Funktionen ausführt. Der Computerprogrammcode definiert eine diskrete Softwareanwendung und/oder ist Teil einer solchen. Der Fachmann versteht, dass der Computerprogrammcode auch auf eine Vielzahl von Software-Anwendungen verteilt sein kann. In einer Ausführungsform bietet der Computerprogrammcode ferner Schnittstellen, wie z.B. APIs (Application Programming Interfaces), so dass auf Softwareanwendungen, Funktionalität und/oder Daten der Vorrichtung 1 aus der Ferne zugegriffen werden kann.

Der Datenspeicher 12 ist eingerichtet Nutzerkriterien 121 und optional Wohnkriterien 120, die von einem Nutzergerät empfangen wurden, zu speichern. In einem Ausführungsbeispiel werden die Nutzerkriterien 121 und optional Wohnkriterien 120 mit einem Nutzer des Nutzergeräts in Verbindung gebracht.

Der Datenspeicher 12 umfasst eine Mehrzahl von gespeicherten Immobiliendatenobjekten 122. Die Immobiliendatenobjekte 122 stellen Eigenschaften eines realen Immobilienobjekts dar. Die Eigenschaften umfassen Immobilieneigenschaften, die sich auf Eigenschaften des Immobilienobjekts selber beziehen, und Standorteigenschaften, die sich auf Eigenschaften des Immobilienstandorts beziehen. Die Immobilieneigenschaften umfassen, zum Beispiel, eine Anzahl Zimmer, eine Anzahl Personen, eine Fläche, ein Baujahr, und einen Immobilientyp. Die Standortkriterien umfassen, zum Beispiel, einen geeigneten Standort, basierend auf Pendelzeiten und/oder Distanzen, einen bestimmten Standort, einen Schallbelastungswert, eine Nähe zu Bildungsinstitutionen, eine Nähe zu Haltestellen des öffentlichen Verkehrs, und eine Nähe zu einem Landschaftstyp. Die Immobiliendatenobjekte 122 umfassen, abhängig von der Ausführungsform, weitere Datenelemente, umfassend einen Beschreibungstext und/oder Medienelemente. Die Medienelemente umfassen Fotos, Videos, Visualisierungen, und/oder Grundrisse des Immobilienobjekts.

In einer Ausführungsform ist die Vorrichtung 1 eingerichtet, das Immobiliendatenobjekt 122 zu analysieren, um Eigenschaften des Immobilienobjekts anhand des Beschreibungstexts oder den weiteren Datenelementen zu extrahieren.

Die Nutzerkriterien 121 und optional Wohnkriterien 120 gehören, je nach Ausführungsform, jeweils in eine bestimmte Kategorie einer Mehrzahl von Kategorien, umfassend Immobilienkriterien, die sich auf spezifische physische Merkmale einer Immobilie an sich beziehen, und Standortkriterien, die sich auf spezifische physische Merkmale des Standorts beziehen.

Die Immobilienkriterien umfassen, je nach Ausführungsbeispiel, eine Anzahl Zimmer, eine Anzahl Personen, eine Fläche, ein Baujahr, und ein Immobilientyp des Immobilienobjekts. Die Anzahl Personen bezieht sich auf die Anzahl Personen, für die der Nutzer ein Immobilienobjekt sucht. Die Vorrichtung 1 bestimmt aus der Anzahl Personen eine Gesamtfläche und/oder eine Anzahl Zimmer mittels eines vordefinierten Schlüssels.

Die Standortkriterien umfassen, je nach Ausführungsbeispiel, einen geeigneten Standort basierend auf Pendelzeiten und/oder Distanzen, einen bestimmten Standort, einen Schallbelastungswert, eine Nähe zu Bildungsinstitutionen, eine Nähe zu Haltestellen des öffentlichen Verkehrs, und eine Nähe zu einem Landschaftstyp.

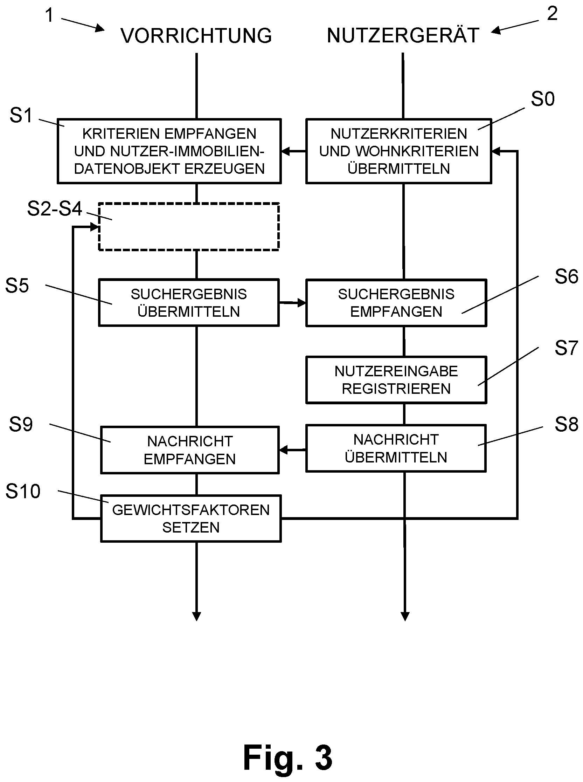

In einem Ausführungsbeispiel stehen die Nutzerkriterien 121 mit einem Gewichtungsfaktor in Verbindung, sodass gewisse Nutzerkriterien 121 höher gewichtet sind als andere. Diese Gewichtungsfaktoren werden entweder vom Nutzergerät 2 empfangen oder durch die Vorrichtung 1 berechnet, wie unten in Bezug auf Figur 3 beschrieben.

Die Vorrichtung 1 kann zum Beispiel als Servervorrichtung ausgeführt werden, die in einem Cloud-basierten Rechenzentrum eingerichtet ist. Die Vorrichtung 1 ist mittels des Kommunikationsmoduls über das Internet 3 mit einem Nutzergerät 2 verbunden. Die Vorrichtung 1 kann auch mit weiteren Geräten, elektronischen Vorrichtungen und Netzwerken verbunden sein, wie zum Beispiel einen Server-Rechner, der sich zum Beispiel vor Ort oder in einem entfernten Rechenzentrum befindet.

Das Nutzergerät 2 verfügt über ein Kommunikationsmodul, mit dem es kommunikativ mit der Vorrichtung 1 verbunden ist. Das Nutzergerät 2 kann zum Beispiel als Computer, Laptop, oder Mobiltelefon ausgeführt werden. Das Nutzergerät 2 verfügt über eine Mensch-Maschine Schnittstelle, wie zum Beispiel ein Touch-Display, eine Tastatur, und/oder eine Computer-Maus.

Das Nutzergerät umfasst einen Datenspeicher. Der Datenspeicher ist eingerichtet, Nutzerkriterien 121 und optional Wohnkriterien 120, die vom Nutzer über die Mensch-Maschine Schnittstelle eingegeben worden sind, zu speichern. Der Datenspeicher ist ferner eingerichtet ein Suchergebnis 21, das von der Vorrichtung 1 empfangen werden, zu speichern. Abhängig vom Ausführungsbeispiel umfasst der Datenspeicher des Nutzergeräts 2 eine oder mehrere Komponenten, wie oben in Bezug auf den Datenspeicher 12 der Vorrichtung beschrieben wurde.

Das Nutzergerät 2 umfasst weiter einen Prozessor. Abhängig vom Ausführungsbeispiel umfasst der Prozessor des Nutzergeräts 2 eine oder mehrere Komponenten, wie oben in Bezug auf den Prozessor 11 der Vorrichtung beschrieben wurde.

Das Kommunikationsnetz 3 ist ein zwischen dem Nutzergerät 2 und der Vorrichtung geschaltetes Netzwerk, welches Datenkommunikation ermöglicht. Je nach Ausführungsform umfasst das Kommunikationsnetz 3 drahtlose wie auch drahtgebundene Kommunikationspfade und eine oder mehrere Kommunikationstechnologien. Zum Beispiel umfasst das Kommunikationsnetz 3 das Internet, wobei das Nutzergerät 2 und die Vorrichtung 1 beide mit dem Internet direkt oder indirekt verbunden sind.

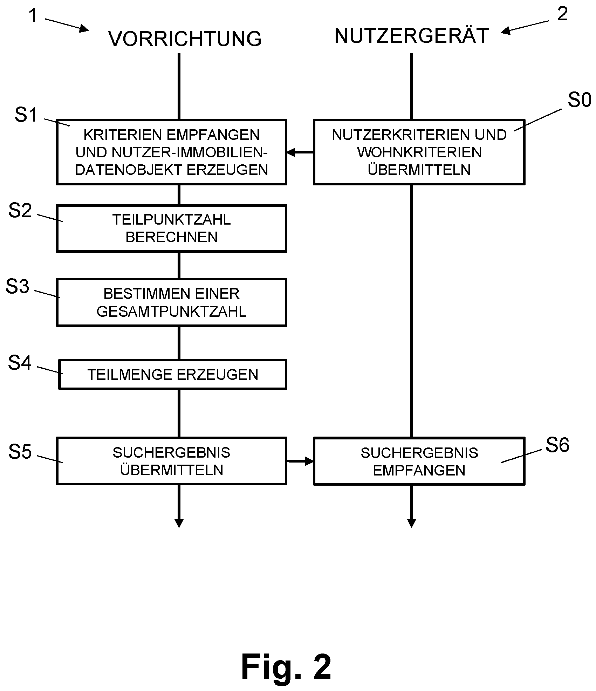

**Figur 2** zeigt ein Flussdiagramm. In Schritt S0 übermittelt das Nutzergerät 2 Nutzerkriterien 121 und optional Wohnkriterien 120 an die Vorrichtung 1 über das Kommunikationsnetz 3. Die Nutzerkriterien 121 und optional Wohnkriterien 120 werden vom Nutzer eingegeben. Die Nutzerkriterien 121 und optional Wohnkriterien 120 werden als Teil einer Suchanfrage übermittelt.

In einer Ausführungsform umfassen die Nutzerkriterien 121 und/oder Wohnkriterien 120 Standortkriterien, die das Nutzergerät 2 bestimmt. Zum Beispiel bestimmt das Nutzergerät 2 Standortkriterien mittels eines verbundenen Mobilfunknetzes um einen ungefähren Standort des Nutzers zu bestimmen. In einem anderen Beispiel bestimmt das Nutzergerät 2 Standortkriterien mittels eines Satellitenpositionsmoduls, das mittels eines Satelliten einen Standort des Nutzergeräts 2 bestimmen kann. Das Nutzergerät 2 kann ferner eingerichtet sein, mittels des bestimmten Standorts und mittels eines vom Nutzer definierten Umkreises, Standortkriterien zu definieren.

In einem Schritt S1 empfängt die Vorrichtung 1 die übermittelten Nutzerkriterien 121 und die optionalen Wohnkriterien 120 und erzeugt aus den optionalen Wohnkriterien 120 ein mit dem Nutzer verknüpftes Immobiliendatenobjekt. In einem Ausführungsbeispiel empfängt die Vorrichtung 1 eine Kennung des Nutzergeräts 2 und/oder eine Kennung des Nutzers. Dadurch können die Nutzerkriterien 121 und/oder Wohnkriterien 120 mit dem Nutzergerät 2 und/oder dem Nutzer assoziiert werden.

Die Vorrichtung 1 ruft mit verfügbaren Immobilien verknüpfte Immobiliendatenobjekte 122 vom Speicher 12 ab, wobei jedes einzelne Immobiliendatenobjekt 122 mehrere zugehörige Eigenschaften hat, die zusammen mit dem jeweiligen Immobiliendatenobjekt 122 oder mit Bezug auf das jeweilige Immobiliendatenobjekt abgerufen werden.

In einem Schritt S2 berechnet die Vorrichtung 1 mehrere Teilpunktzahlen für jedes Immobiliendatenobjekt 122, wobei die Immobiliendatenobjekte eine Mehrzahl von mit verfügbaren Immobilien verknüpften Immobiliendatenobjekten und optional das mit dem Nutzer verknüpfte Immobiliendatenobjekt umfasst. Jede Teilpunktzahl wird berechnet durch einen Vergleich zwischen einer Eigenschaft des Immobiliendatenobjekts 122 und einem dazugehörigen Nutzerkriterium. Die Vorrichtung 1 ist eingerichtet, aus dem Vergleich einen Übereinstimmungsgrad zu bestimmen, für jede Eigenschaft, und dadurch die Teilpunktzahl zu bestimmen.

Zum Beispiel umfassen die Nutzerkriterien 121 Standortkriterien, die eine definierte Reisezeit zu einem definierten Ort bestimmen. Die dazugehörige Immobilieneigenschaft ist eine Standorteigenschaft, insbesondere die geographische Lage und die damit eingehenden Anbindungen an private und öffentliche Verkehrsmöglichkeiten. Falls ein bestimmtes Immobiliendatenobjekt 122 eine geographische Lage hat, die das Standortkriterium erfüllt oder sogar überschreitet, ist der Übereinstimmungsgrad hoch. Falls ein bestimmtes Immobiliendatenobjekt 122 jedoch nicht die in den Standortkriterien definierte Reisezeit zum definierten Ort erfüllt, ist der Übereinstimmungsgrad tief. Verschiedene mathematische Funktionen können diesen Übereinstimmungsgrad, abhängig von der Reisezeit zum definierten Ort und der geographischen Lage, abbilden. Zum Beispiel wird eine stückweise lineare Funktion eingesetzt, die ihren Maximalwert erreicht, falls das Immobiliendatenobjekt 122 eine geographische Lage hat, die übereinstimmt mit dem definierten Ort, die eine erste Steigung hat für alle Immobiliendatenobjekte 122, welche eine Reisezeit ermöglichen, die unter der definierten Reisezeit liegt, und eine zweite Steigung für Immobiliendatenobjekte 122, die über der definierten Reisezeit liegen. Je nach Ausführungsform kann auch eine Normalverteilung oder eine Exponentialfunktion eingesetzt werden.

Auf ähnliche Weise werden die weiteren Nutzerkriterien 121 mit den Eigenschaften des Immobiliendatenobjekts 122, auf die sie bezogen sind, in der Vorrichtung 1 verglichen, um weitere Teilpunktzahlen zu berechnen. Je nachdem, wie viele Eigenschaften für ein bestimmtes Immobiliendatenobjekt 122 bestimmt sind, und wie viele Nutzerkriterien 121 definiert wurden, die mit den Eigenschaften assoziiert sind, können unterschiedlich viele Teilpunktzahlen berechnet werden.

In einer Ausführungsform wird jede Teilpunktzahl einer Kategorie von Eigenschaften zugeordnet. Insbesondere werden die Teilpunktzahlen, abhängig von der Eigenschaft des Immobilienobjekts 122, auf die sie sich beziehen, zu der Kategorie Immobilieneigenschaften oder der Kategorie Standorteigenschaften zugeordnet.

In einem Schritt S3 bestimmt die Vorrichtung 1 eine Gesamtpunktzahl für jedes Immobiliendatenobjekt 122. Die Gesamtpunkzahl für ein Immobiliendatenobjekt 122 wird anhand der Teilpunktzahlen bestimmt, insbesondere durch Summieren der Teilpunktzahlen.

Die Vorrichtung 1 ist eingerichtet, in einem Schritt S4 eine Teilmenge der Immobiliendatenobjekte 122 zu erzeugen. Die Immobiliendatenobjekte 122 mit den höchsten Gesamtpunkzahlen werden der Teilmenge zugeordnet. Insbesondere haben die Immobiliendatenobjekte 122, die zur Teilmenge gehören, jeweils eine höhere Gesamtpunktzahl, als die Immobiliendatenobjekte 122, die nicht zur Teilmenge gehören. Die Anzahl Immobiliendatenobjekte 122 der Teilmenge istabhängig von einem Gesamtpunktzahlschwellenwert und/oder einer maximalen Grösse der Teilmenge oder der Gesamtpunktzahl des mit dem Nutzer verknüpften Immobiliendatenobjekts oder eine gewichtete Kombination der grösser-oder-gleich-Relationen.

In einem Schritt S5 übermittelt die Vorrichtung 1 ein Suchergebnis 21, das die Teilmenge der Immobiliendatenobjekte 122 umfasst, an das Nutzergerät 2. Das Übermitteln des Suchergebnisses ist, abhängig vom Ausführungsbeispiel, aufgeteilt in mehrere Übermittlungen.

In einem Schritt S6 empfängt das Nutzergerät 2 das übermittelte Suchergebnis 21. Das Suchergebnis 21 wird auf dem Display des Nutzergeräts 2 dargestellt. Insbesondere werden die übermittelten Immobiliendatenobjekte 122 dargestellt, vorzugsweise in absteigender Reihenfolge der Gesamtpunktzahlen.

In einem Ausführungsbeispiel ist die Vorrichtung 1 eingerichtet, das Suchergebnis 21 vor der Übermittlung zu komprimieren. Das Nutzergerät 2 ist ferner eingerichtet, das Suchergebnis 21 mindestens teilweise zu entkomprimieren. Dadurch beansprucht das Suchergebnis ein kleineres Datenvolumen. Zum Beispiel werden Bilder, die zum Immobiliendatenobjekt 122 gehören, komprimiert.

In einem Ausführungsbeispiel umfasst das Suchergebnis 21 die Gesamtpunkzahl und/oder die Teilpunktzahlen der Immobiliendatenobjekte 122. In einem bevorzugten Ausführungsbeispiel ist das Nutzergerät 21 eingerichtet, anhand der Gesamtpunkzahl und/oder die Teilpunktzahlen ein Grafikelement zu erzeugen, welches graphisch die Übereinstimmung des Immobiliendatenobjekts 122 mit den Nutzerkriterien 121 darstellt. Das Nutzergerät 2 ist eingerichtet, das Grafikelement in Verbindung mit dem Immobiliendatenobjekt 122 mittels des Displays darzustellen.

In einem Ausführungsbeispiel umfasst das Suchergebnis 21 das Grafikelement.

In einem Ausführungsbeispiel umfasst das Grafikelement Teilelemente, wobei eine geometrische Eigenschaft des Teilelements, vorzugsweise eine Länge und/oder Fläche eines Teilelements, proportional zu der Gesamtpunktzahl und/oder proportional zu einer Teilpunktzahl ist. Die Länge kann auch eine Kurvenlänge sein, zum Beispiel die Länge eines Kreissegments.

**Figur 3** zeigt ein Flussdiagramm gemäss einem Ausführungsbeispiel. Schritte S0 bis S6 wurden bereits mit Bezug auf Figur 2 oben beschrieben. In einem Schritt S7 zeichnet das Nutzergerät 2 eine Nutzerinteraktion auf. Das Nutzergerät 2 ist eingerichtet, Nutzerinteraktionen in Verbindung mit einem Immobiliendatenobjekt 122 zu speichern. Die Nutzerinteraktionen umfassen, je nach Ausführungsform, eine Ansicht eines Immobiliendatenobjekts, eine Dauer einer Ansicht eines Immobiliendatenobjekts, insbesondere eine Ansicht von Medienelementen und/oder eine Eingabe einer Bewertung eines Immobiliendatenobjekts. Das Nutzergerät 2 ist eingerichtet aus den Nutzerinteraktionen Indikatoren zu bestimmen, wobei jeder Indikator in Verbindung mit einem bestimmten Immobiliendatenobjekt 122 steht.

Der Indikator zeigt an, ob das damit verbundene Immobiliendatenobjekt in einem höheren oder tieferen Grad mit den Nutzerkriterien 121 übereinstimmt. Zum Beispiel zeigt der Indikator, bei einer positiven Bewertung eines Immobiliendatenobjekts 122, einen höheren Übereinstimmungsgrad.

In einem Schritt S8 übermittelt das Nutzergerät 2 eine Nachricht mit den Indikatoren an die Vorrichtung 1. In einem Schritt S9 empfängt die Vorrichtung 1 die Nachricht.

In einem Schritt S10 setzt die Vorrichtung 1 Gewichtsfaktoren anhand der Indikatoren und der dazugehörigen Immobiliendatenobjekte 122. Zum Beispiel ist die Vorrichtung 1 eingerichtet, Immobiliendatenobjekte mit ähnlichen Indikatoren auf gemeinsame Eigenschaften zu prüfen und die Gewichtsfaktoren, die mit diesen Eigenschaften assoziiert sind, entsprechend den Indikatoren höher bzw. tiefer zu setzen.

In einem Ausführungsbeispiel enthält die Nachricht einen Befehl, Schritt S2 wie oben beschrieben neu auszuführen. Die Teilpunktzahlen für jedes Immobiliendatenobjekt 122 wird entsprechend den neu gesetzten Gewichtsfaktoren neu berechnet. Die darauffolgenden Schritte werden, wie oben beschrieben, ausgeführt um eine neue Teilmenge zu erzeugen und ein neues Suchergebnis 21 zu übermitteln, das die neue Teilmenge umfasst.

In einem Ausführungsbeispiel enthält die Nachricht angepasste Nutzerkriterien 121. Die Vorrichtung 1 ist eingerichtet, Schritt S1, wie oben beschrieben, neu auszuführen und basierend auf den neu gesetzten Gewichtsfaktoren und den angepassten Nutzerkriterien 121 die Teilpunktzahlen für jedes Immobiliendatenobjekt 122 neu zu berechnen.

## Patentansprüche

1. Vorrichtung (1) zur Übermittlung von Immobiliendatenobjekten (122), umfassend einen Prozessor (11) und einen nichtflüchtigen Datenspeicher (12), wobei der Prozessor (11) eingerichtet ist, folgende Schritte auszuführen:
Empfangen (S1) von Wohnkriterien (120) von einem Nutzergerät (2) über ein Kommunikationsnetz (3), wobei die Wohnkriterien (120) Immobilienkriterien und Standortkriterien umfassen und sich auf eine aktuelle Wohnsituation eines Nutzers beziehen, wobei ein Immobilienkriterium auf eine Immobilieneigenschaft bezogen ist und ein Standortkriterium auf eine Standorteigenschaft bezogen ist, und Erzeugen eines mit dem Nutzer verknüpften Immobiliendatenobjekts (122) anhand der Wohnkriterien (120);
Empfangen (S1) von Nutzerkriterien (121) von dem Nutzergerät (2) über das Kommunikationsnetz (3), wobei die Nutzerkriterien (121) Immobilienkriterien und Standortkriterien umfassen;
Berechnen (S2), für jede Eigenschaft einer Mehrzahl von Immobiliendatenobjekten (122), umfassend des mit dem Nutzer verknüpften Immobiliendatenobjekts und umfassend einer Mehrzahl von mit verfügbaren Immobilien verknüpften Immobiliendatenobjekten, einer Teilpunktzahl entsprechend einem Übereinstimmungsgrad der jeweiligen Eigenschaft und des dazugehörigen Nutzerkriteriums (121);
Bestimmen (S3), für jedes Immobiliendatenobjekt (122), einer Gesamtpunktzahl des Immobiliendatenobjekts (122) anhand der Teilpunktzahlen des Immobiliendatenobjekts (122);
Erzeugen (S4), anhand der Mehrzahl von Immobiliendatenobjekten (122), einer Teilmenge der Immobiliendatenobjekte (122), wobei die Gesamtpunktzahl jedes Immobiliendatenobjekts (122) der Teilmenge grösser oder gleich gross ist wie die Gesamtpunkzahl jedes übrigbleibenden Immobiliendatenobjektes (122) und grösser oder gleich gross ist wie die Gesamtpunkzahl des mit dem Nutzer verknüpften Immobiliendatenobjektes; und
Übermitteln (S5) von einem Suchergebnis (21) zu dem Nutzergerät (2) über das Kommunikationsnetz (3), wobei das Suchergebnis (21) die Teilmenge von Immobiliendatenobjekten (122) umfasst.

2. Vorrichtung (1) nach Anspruch 1, wobei die Nutzerkriterien (121) Personeninformationen umfassen.

3. Vorrichtung (1) nach einem der Ansprüche 1 oder 2, wobei der Prozessor (11) eingerichtet ist, die Gesamtpunkzahl als eine Gewichtssumme der Teilpunktzahlen zu berechnen.

4. Vorrichtung (1) nach einem der Ansprüche 1 bis 3, wobei das Suchergebnis (21) ferner die Gesamtpunktzahl und/oder die Teilpunktzahlen jedes Immobiliendatenobjekts (122) der Teilmenge enthält.

5. Vorrichtung (1) nach einem der Ansprüche 1 bis 4, wobei das Suchergebnis (21) ferner ein Grafikelement umfasst für jedes Immobiliendatenobjekt (122) der Teilmenge, wobei das Grafikelement mindestens die Teilpunktzahlen als Teilelemente darstellt, wobei eine dargestellte Länge oder Grösse jedes Teilelements proportional zur dazugehörigen Teilpunktzahl ist.

6. Vorrichtung (1) nach einem der Ansprüche 1 bis 5, wobei der Prozessor (11) eingerichtet ist, die Teilmenge der Immobiliendatenobjekte (122) mittels einem definierten Gesamtpunktzahlschwellenwert zu erzeugen, wobei jedes Immobiliendatenobjekt (122) der Teilmenge eine Gesamtpunktzahl aufweist die grösser oder gleich ist wie der Gesamtpunktzahlschwellenwert.

7. Vorrichtung (1) nach einem der Ansprüche 1 bis 6, wobei der Prozessor (11) eingerichtet ist, die Teilmenge der Immobiliendatenobjekte (122) mittels einer vordefinierten maximalen Anzahl von Mitgliedern der Teilmenge zu erzeugen.

8. Vorrichtung (1) nach einem der Ansprüche 1 bis 7, wobei der Prozessor (11) eingerichtet ist, die Teilmenge von Immobiliendatenobjekten (122) vor der Übermittlung zu komprimieren.

9. Vorrichtung (1) nach einem der Ansprüche 1 bis 8, wobei die Immobilienkriterien eines oder mehrere der folgenden umfassen: eine Anzahl Zimmer, eine Anzahl Personen, eine Fläche, ein Baujahr, und ein Immobilientyp.

10. Vorrichtung (1) nach einem der Ansprüche 1 bis 9, wobei die Standortkriterien eines oder mehrere der folgenden umfassen: einen geeigneten Standort basierend auf Pendelzeiten und/oder Distanzen, einen bestimmten Standort, einen Schallbelastungswert, eine Nähe zu Bildungsinstitutionen, eine Nähe zu Haltestellen des öffentlichen Verkehrs, und eine Nähe zu einem Landschaftstyp.

11. Vorrichtung (1) nach einem der Ansprüche 1 bis 10, wobei der Prozessor (11) ferner eingerichtet ist, Indikatoren eines Verhaltens des Nutzers von dem Nutzergerät (2) über das Kommunikationsnetz (3) zu empfangen, wobei die Indikatoren aufzeigen, mit welchen im Nutzergerät (2) empfangenen Immobiliendatenobjekten (122) der Nutzer interagiert hat, und die Teilpunktzahl von weiteren Immobiliendatenobjekten (122) anhand der Indikatoren zu berechnen.
